# EUROPEAN PATENT APPLICATION

(11) **EP 3 116 159 A1**
(43) Date of publication of application: **11.01.2017**
(21) Application number: 16460040.5
(22) Date of filing: 29.06.2016
(51) Int. Cl.: H04L 9/30, H04L 9/32, H04L 9/08

(54) **METHOD AND APPARATUS FOR SECURING DATA TRANSMISSION**

(30) Priority: 01.07.2015 PL 41298215
(71) Applicant: Comarch Spolka Akcyjna, 31-864 Krakow (PL)
(72) Inventor: Jarzecki, Arkadiusz, 31-864 Kraków (PL); Sowa, Grzegorz, 31-864 Kraków (PL)

(57) **Abstract**

The invention relates to method for securing data transmission, especially transaction data, using the apparatus (1), which is connected to the computing device (2) connected to the server (4) which performs the transaction. A transaction participant with the access to the server (4) prepares transaction data (104), next the server (4) signs (107) and encrypts (108) these data and sends them to the apparatus (1). The apparatus (1) decrypts transaction data (109), verifies their signature (111), forces the user to perform at least one defined processes and afterwards performs authorization (116). The apparatus (1) produces a print screen with transaction data (117) presented to the user. Next the user approves the transaction (118) and then the apparatus (1) signs transaction data (119) and the print screen (120) and encrypts the transaction data (121). The server (4) decrypts transaction data (122), verifies the signature of the print screen (123) and signature of the transaction data (124). The apparatus (1), according to the invention comprises of at least an output interface (10), an input interface (11), a dedicated cryptographic chip (12) and a communication module (13).

## Description

Invention relates to the method for securing data transmission, especially transaction data, using a separate apparatus through which is a secure communication channel is set up. The invention also relates to the apparatus for securing data transmission..

In the new world of information society one of the most important thing is the information and access to it. Very often information is worth more than tangible goods. It is especially visible in such areas like business and security. Due to the value that a particular information can have for its recipients, the need to restrict access to it only to authorized entities is one of the crucial issues in the electronic communication. Non restricted access of an unauthorized entity to information with significant value and importance may raise serious consequences both for individuals and society. Unauthorized entities can use this information to threaten society and individuals. Information gained by unauthorized entities may be used also for unlawful actions and thefts. The most visible example of this event is intercepting information concerning electronic banking transactions by an unauthorized entity. After intercepting specific information, unauthorized entity may use it to steal money directly from client's bank account or it can be used in a phishing attack making an unaware client create a deposit on the thief's bank account.

Electronic funds transfers via the Internet are significantly simplified and expedited banking operations. On the other hand this method constitutes a big threat of exposure to the theft of money. However the advantages of the electronic banking transactions are far bigger than existing threats. Therefore in order to secure information of banking transactions from unauthorized entities numerous solutions have been proposed. These solutions may be software solutions and hardware-software solutions.

One of the basic and the most popular method for securing access to the bank client's data are login and static password. This method basis on what user (bank client) knows. This is a simple method of users identification (authorization), which enables secure access to bank account and recognizes client by the bank. Password may be additionally secured by e.g. identifiers like ID number or password echo.

Other method for securing data are passwords and one-time codes, which are used to confirm transactions. This is a one-time password method. Each subsequent password and code serves to confirm next transaction. Passwords and codes may be saved on a list e.g. a scratch card. Also they can be sent to the client every time as a SMS to the indicated phone number. Thanks to this only the owner of the phone to which the code was sent may conduct the transaction. The SMS method as an addition to the one-time code may include data relating to transaction data - digits of the account number, the money amount and the date of the transfer. Thanks to this, the client may check whether he/she has received the code to the right transaction. The advantage of this type of a solution is also that SMS codes are valid only for a short time and cannot be used for later confirmation of the transaction.

Another solution used to secure transactions are tokens. Use of tokens is widely regarded as a strong method of authentication and therefore as a strong method for securing transactions. This method is based on what a bank client has. A token owned by a user generates unique strings of digits in fixed intervals. When the request to confirm transaction appears, a user uses a code generated by the token at that moment. The same code is generated in the bank system. On the basis of the code bank performs user authentication and authorization. Therefore the transaction can be created only when the user has a physical access to the token. Usually the generated code is valid for a short time. Tokens may have various forms and functions. They can be simple devices equipped with one-line display and a button to generate code. They can also have a keyboard and a display for entering additional data with the use of PIN. Some tokens are a software solution. For example a GSM token which is an application for mobile computing devices e.g. mobile phones, which generates one-time codes. If the user confirms description of the transaction presented by the application, said application generates a code to approve transaction. Another method of authorization with the use of a token is a challenge - response code - a function to generate codes based on combined pairs of the corresponding data e.g. the account number and the transaction amount indicated by the user.

To secure data, including transaction data, the electronic signature is also used. An electronic signature is used to authenticate origin, undeniability and integrity of data. The unique electronic signature is assigned to an individual user. This signature is generated on the basis of data used to identify the user by the bank's system. An electronic signature is usually based on the asymmetric cryptography. This cryptography uses two or more sets of associated keys. The action is based on the pair: public key - private key. The private key serves to sign and public key to verify signature. Private key cannot be easily reconstructed on the basis of the public key. The private key is held only by the addressee, thus only he/she can read the message. In turn, the public key is held by the person who wants to sign (encrypt) the message The electronic signature is directly related to the signed document, so it cannot be moved to another location.

Another method used to secure transaction is data encryption. Encryption can be symmetric or asymmetric. Symmetric encryption is based on encryption and decryption of the information using the same key. The key is delivered to the parties through the trusted channel. Symmetric encryption is less secure than asymmetric encryption. However it is faster than asymmetric encryption. By applying both types of encryption the conducting of the transaction becomes faster and safer. Moreover, each key can be a session key i.e. a key which is valid only once.

Advanced methods for securing electronic communication are very often based on a combination of different above mentioned methods. For example solution which combines a token and symmetric and/or asymmetric cryptography.

From the patent application WO2010066304 the method for digitally signing transaction data using a digital signature scheme based on cryptographic primitives, preferably asymmetric cryptography is known. According to the invention digitally signing comprises: sending data on the basis of the transactional data from an e-commerce server to a service provider, digitally signing the received data by using a private signature generation key of the service provider, generating visually observable digitally signed data on the basis of the digitally signed data and providing the visually observable digitally signed data to a user. The invention relates also to the method for verifying whether the visually the visually observable signed data are signed by the service provider. The verifying method comprises of: capturing the visually observable digitally signed data with a camera of a mobile device and temporarily storing the captured data in form of image data in a memory of the mobile device, transforming image data into digitally signed data, verifying whether the digitally signed data are signed by the service provider by using the public key signature verification key of service provider and displaying the results of the verifying step on a display of the mobile device.

In turn, from patent application WO2013102003 handheld authentication device comprising a data processor and a display is known. The device generates an input value. And then submits the input value to the asymmetric cryptographic operation. The generated authentication message has the result of the asymmetric cryptographic operation, and the authentication message is encoded into one or more images displayed on the display. A method for securing computer-based applications remotely accessed by a user comprises capturing images displayed on the display of the authentication device of the user. These images are encoded with the authentication message generated by the authentication device. The authentication message comprises the result of the asymmetric cryptographic operation on an input value, decoding the images to retrieve the authentication message and verifying the authentication message.

The objective of the present invention is to provide solution which will effectively secure data transmission between parties of the transaction and prevent access to these data by unauthorized entities. This goal is achieved by the implementation of the technical features of the invention presented below.

The invention relates to the method for securing data transmission, especially transaction data, using the apparatus containing output an interface and an input interface, which are connected to a computing device connected to a server performing transaction. A transaction participant with access to the server prepares transaction data, whereby the server signs and encrypts these data and sends transaction data to the apparatus. The apparatus decrypts transaction data and verifies their signature. After the transaction approval by the participant, the apparatus signs, encrypts and sends transaction data to the server which decrypts transaction data and, verifies their signature. The invention characterized in that keys based on the elliptic curve cryptography (ECC) are used to generate signatures. Moreover, the transaction participant with the access to the server generates an unique sequential number for each subsequent transaction during the preparation of the transaction data. Additionally the apparatus produces a print screen with the transaction data presented to the user.

The server produces the print screen with transaction data based on data received from the apparatus. The apparatus forces user to perform at least one defined process. To perform a defined process, the server selects a defined process, then the apparatus stores the definition of the selected process and subsequent steps of the process defined according to the definition and sends a request to the user to perform a n-step of the process after the n-step is performed by the user, the cycle is repeated until all defined steps of the process are performed. The transaction approval is carried out by entering PIN by the user, where PIN consists of letters and/or digits and/or special characters. Keys used to sign transaction are the ECC-P256 keys. Transaction data sent between the server and the apparatus are encrypted with the use of symmetric AES-256 key. The symmetric AES-256 key is agreed upon with the use of the Diffie Hellman (ECDH) protocol. To secure multi-transaction compilation, user's financial and accounting system generates a hash total and a total amount before starting the transaction. Before executing the transaction the apparatus performs authentication of the transaction participant who has the access to the server. The apparatus, while connecting to the server for the first time generates user's key, afterwards the apparatus signs the user's key with the apparatus' key and sends this key to the server which verifies the signature, then the transaction participant who has access to the server assigns user's key to the particular user.

The invention relates also to the apparatus for securing data transmission, especially transaction data, has at least a communication module, a microcontroller, an output interface and an input interface. The invention characterized in that comprises the dedicated cryptographic chip with the cryptographic keys, and the communication module is USB module and/or Bluetooth module and/or GSM module.

Preferably, the output interface and the input interface are touchscreen. The output interface and the input interface are the display and the keyboard. The input interface is designed to enter digits and/or letters and/or special characters.

The solution, according to the invention, secures data transmitted between parties from unauthorized access in a very effective way. Deployment of an external device connected to a computer, provides an encrypted communication channel between the server and the device. This results in protection against attack such as Man in the browser attack key-loggers attacks. A computer potentially exposed to the risk is only a transmission medium between the server and the service. One of the advantages of the invention is also a counter-phishing mechanism. Thanks to the use of ECDH for the symmetric key agreement, it is almost impossible for unauthorized entities to decrypt the encrypted information sent between the parties. Moreover producing a print screen with the transaction data and reproducing it by the transaction participant who has the access to the server (bank) on the basis of the received data, allows this entity to verify whether transaction data are correct.

The invention is presented in the embodiments on drawings in which:
Fig. 1 presents a general scheme of the method for securing data transmission.
Fig. 2 presents a schematic view of the apparatus with a touch screen.
Fig. 3 presents a schematic view of the apparatus with a display and a keyboard.
Fig. 4 presents a flowchart of the method for securing data transmission for one transaction.
Fig. 5 presents a flowchart of the method for securing data transmission for many transaction.
Fig. 6 presents a flowchart of the user's key assignment to the particular user.
Fig. 7 presents keys, which can be found in the apparatus, used to secure data transmission in accordance with the invention.
Fig. 8 presents keys, which can be found in the trusted server used to secure data transmission in accordance with the invention.

In the presented below embodiment of the invention the method for securing data transmission of the banking transaction is described. Of course the presented invention is not limited only to secure banking transactions. It can be also used to secure e.g. messages or files sent between parties.

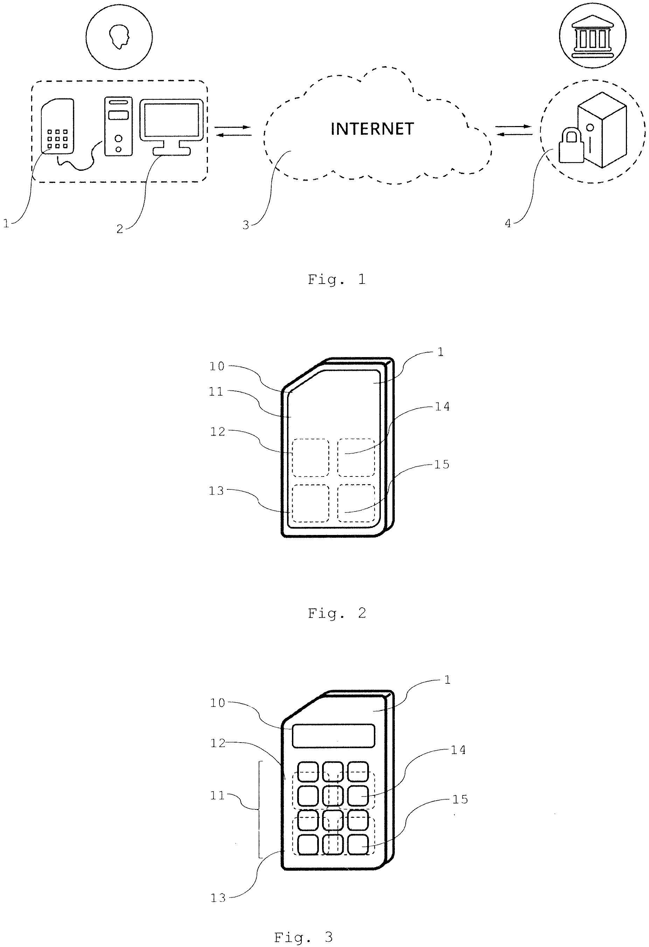

The general scheme of the method for securing data transmission of banking transaction in accordance with the invention is shown in fig. 1. To carry out the transaction, the user, in this case - the bank client, needs to have a physical access to the apparatus 1, which is connected to the computing device 2. Apparatus 1 is a portable handheld device of a size similar to a mobile phone. The computing device 2 may be a PC, a laptop or a tablet. In the presented embodiment, the apparatus 1 is connected to the computing device 2 via USB. This allows for data transmission between these devices and also powers battery of the apparatus 1 or the apparatus 1 itself if it has no other power source. In the different embodiment the apparatus 1 can be connected to the computing device 2 wirelessly e.g. via Bluetooth. According to the invention the user's computing device 2 is connected to the Internet 3 through which it connects to the server 4. The transaction participant has the access to the server 4 which in this particular embodiment is the bank. Thus, all communication between the computing device 2 with the connected apparatus 1 and the server 4, in which transferred data needs to be secured, is carried out over the Internet 3.

The apparatus 1, as it was mentioned above, is a portable device of a size similar to a mobile phone. According to the invention it has the output interface 10 and the input interface 11. The output interface 10 display messages directed to the user, e.g. instruction to perform certain action. Whereas the input interface 11 enables the user to perform the requested action, for example entering some data. In the embodiment presented in fig. 2 the output interface 10 and the input interface 11 are designed to be a touchscreen. This touchscreen is equipped with the color display LCD TFT 3.5 inches, resolution 320 x 480 pi and a QWERTY keyboard. This design project make the apparatus user interface look similar to mobile phones or other mobile devices interfaces. Thanks to this presented information concerning transaction and activities related to this transactions are clear and understandable to the user. In other embodiment shown in fig. 3 the output interface 10 an the input interface 11 are divided into separate display and keyboard The input interface 11 is a monochromatic display, with 68 x 128 pi resolution. On such a screen four text lines, witch 16 characters in each line, can be displayed. Input interface 11 is the alphanumeric keyboard. This type of display guarantees that there is little possibility of providing the user with transactions information, especially thanks to its design and intuitiveness of use. Application with this type of display has other advantages, such as: lower energy consumption and lower manufacturing costs of the apparatus 1. According to the invention apparatus 1 is also equipped with the cryptographic chip 12, the communication module 13, the microcontroller 14 and the battery 15. The cryptographic chip 12 comprises of cryptographic keys used to secure transmitted data. The communication module 13 is responsible for connection between the apparatus 1 and the computing device 2. In the present embodiment communication module 13 is an USB module and a Bluetooth Low Energy module. Thanks to this, apparatus 1 can have both wired and wireless connection to the computing device.2. In a different embodiment, a GSM module can be used as the communication module 13. The battery 15 is a lithium-ion battery. In the optional embodiment, the apparatus may have no battery 15. In that case, however, the apparatus 1 must have the communication module 13 i.e. a USB module through which the power is supplied.

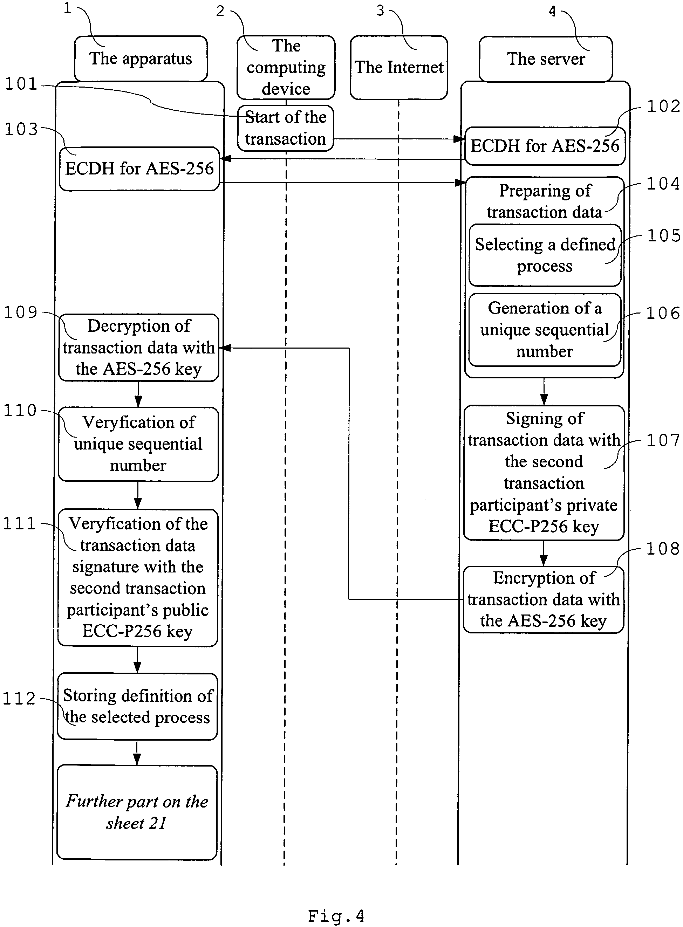

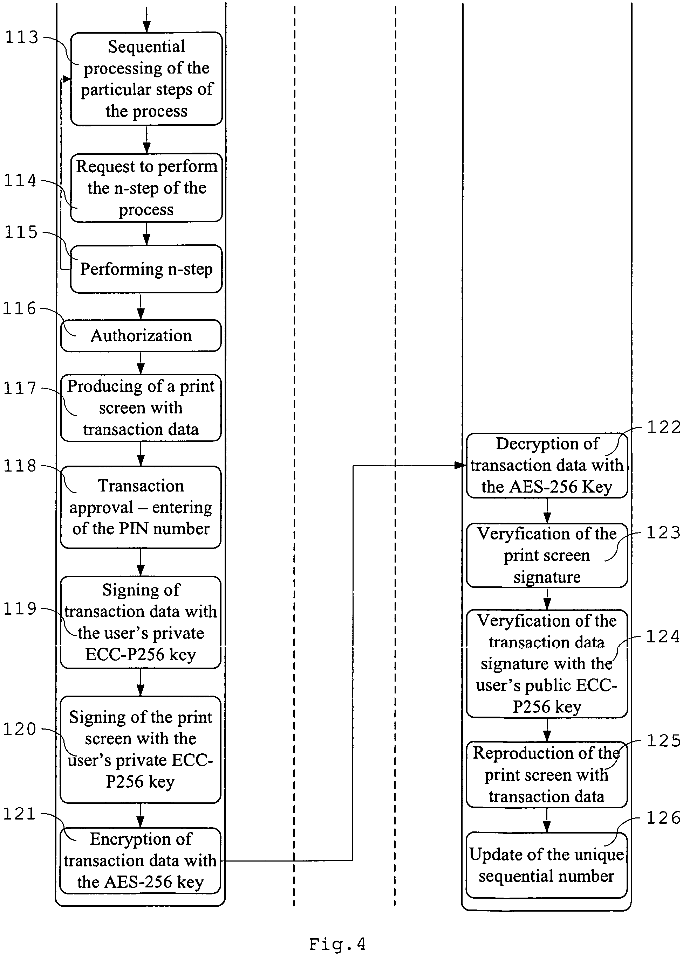

Fig. 4 shows embodiment of the method for securing data transmission for one transaction. In order to perform the transaction the user - bank client visits the bank's transaction website. Computing device 2 connects via the Internet 3 to the bank's transaction system and to the server 4, which is responsible for performing activities related to securing data transmission attributed to the transaction participant. Computing device 2 is connected to the apparatus 1. In the presented embodiment, the connection is established via the USB connection. In different embodiments, the connection may by established via Bluetooth or GSM connection. According to the invention the transaction starts 101 on the user's computing device. After starting the transaction by the user the key used to encrypt transaction data sent between the apparatus 1 and the server 4 is agreed upon. According to the invention to encrypt transaction data the symmetric cryptography is used with the symmetric AES-256 key 304. During the key-agreement process the server 4 and the apparatus 1 agree upon the symmetric AES-256 key with the use of Diffie-Hellman Protocol (ECDH) 102, 103. The key 304 is stored on the apparatus 1 and the server 4. In order to increase the security the symmetric AES-256 key 304 is agreed upon each time during each communication between the apparatus 1 and the server 4. After key 304 agreement the server 4 prepares transaction data 104. As part of preparation of the transaction data the server 4 selects defined process to be performed 105 and generates an unique sequential number 106. Generating an unique sequential number for each transaction prevents the user - the ban client from the man in the middle attack. The process selected to be performed is used to force the user - the bank client to perform certain actions on the apparatus 1, which is one of the part of the whole process of securing the transaction. To perform this process the user is required to interact physically e.g. by entering some values using the input interface (keyboard) 11 with the apparatus 1. Processes to be performed by the user are generated by the second transaction participant - the bank. In the presented embodiment only one of the processes to be performed by the user has been chosen; However, in different embodiments, it is.possible that the server 4 may select several processes to be performed. Prepacing transaction data 104 :with choosing the defined proce.ss 105, and generating the unique sequential number 106 can take place in a dedicated bank's server or can be performed directly on the server 4. In the current embodiment these activities are performed on the server 4. Next, the transaction data, including defined process and unique sequential number are signed 107 and encrypted 108. To sign the transaction data the asymmetric cryptography is used. According to the invention keys used to sign the transaction data use the elliptic curve cryptography (ECC). Server 4 signs the transaction data 107 with the bank's private key ECC-P256 key 402. Next, the transaction- data are encrypted 108 with the symmetric key AES-256 304. So secured transaction data are sent to the computing device 2, which forwards these data to the connected apparatus 1. After receiving the transaction data apparatus 1 decrypts these data 109 with the use of symmetric key AES-256 key 304. Next, apparatus 1 verifies the unique sequential number 110. Through the verification of this number the apparatus 1 is able to detect whether there was a man in the middle attack on the transaction system. After verification of the number, the apparatus 1 verifies signature of the transaction data 111. To verify this signature the bank's public ECC-P256 302 key stored on the apparatus 1 is used. After decrypting and verifying the signature of the transaction data apparatus 1 stores the process definition 112 selected by the server 4. Next, the apparatus 1 starts sequential processing of the particular steps of the process in accordance with the definition 113. As a result of this operation, the apparatus 1 sends the user a request to perform first step of the process 114. A request to perform the first step of the n-step process is presented to the user with the use of the output interface 10. According to what has been described above such output interface can be the color display LCD TFT 3,5 inches with the resolution 320 x 480 pi or monochrome display with the resolution 64 x 128 pi, which can display four text lines, 16 characters in each line. Next, the user performs the selected step of the process 115 according to the presented request. The input interface 11 is used to perform the step of the process, by using this interface the user enters required values into the apparatus 1. If this process consists only of one step, after this step is performed by the user, the apparatus 1 on the authorization 116. However, if the defined process consists of n-steps the apparatus 1, after the user has performed the first of the steps, formulates the subsequent step of the process and sends a request for its implementation 114 to the user. The user performs subsequent step of the process 115 and the cycle is repeated until all steps of the process are performed according to the definition. After performing the last step of the process by the user, apparatus 1 authorizes 116 the user - the bank client. An example of a process selected by the server 4 to be performed, is acceptance of the transaction data by the user. According to the definition this process consists of the following steps:
- presentation of the transaction data
- confirmation the read of data
- presentation of the request to enter transaction amount
- entering of the transaction amount
- presentation of the request to enter selected transaction data
- entering of the selected transaction, data.

Apparatus 1, stores the definition of this process and begin the sequential processing, after that it presents the transaction data on the display with request to confirm the data. The user confirms the data by pressing the appropriate button on the keyboard. Next, the apparatus 1 displays the request to enter the transaction amount. The user enters this amount and approves it. In the end, the apparatus 1 displays the request to enter the first, eight, eleventh and sixteenth digit of the account number. The user enters these digits and approves them. At this point all defined steps of the process are performed and the apparatus 1 begins the authorization 116. The way how the subsequent steps of the process are carried out depends on the type of the output interface 10 and the input interface 11 used in the apparatus 1. When the apparatus 1 has a touch screen with a big diagonal and high resolution all process to be performed may be presented on one or two screens. This display may present the transaction data with their confirmation request on one screen, and on the other the request to enter the transaction amount and the selected transaction data. If the apparatus 1 has a small display with a low resolution which displays up to few text lines it cannot simultaneously display all the transaction data. In this case, the steps of the defined process to be performed by the user need to be divided into smaller parts, so that they can be presented to the user on the display. The method for securing data transmission according to the invention may comprise of one defied process to be performed as it takes place in the current embodiment, or may comprise of several independent processes. After the authorization 116 the apparatus 1 makes a print screen of the transaction data 117. The print screen of the transaction data presented to the user to read is a proof of the transaction. Next, the user approves the transaction by entering the PIN 118. In the current embodiment the PIN contains digits, letters as well as special characters. The Qwerty keyboard used in the apparatus 1 allows for entering of such values. In different embodiment the PIN can consist only of digits. Because the PIN is entered by the user directly on the apparatus 1 and not on the computing device 2, the entities trying to conduct the keylogger attack are not able to get to know this number. This is because the PIN never leaves the apparatus 1. Next, the apparatus 1 signs the transaction data 119 with the user's private ECC-P256 key stored on the apparatus 1. The apparatus 1 signs the print screen 120 also with the user's private ECC-P256 key 301. Next, the apparatus 1 encrypts the transaction data 121 with the symmetric AES-256 key 304. The signed and encrypted transaction data and the signature of the print screen are sent to the sever 4. After establishing the communication the server 4 decrypts transaction data 122 with the symmetric key AES-256 304. Then, server 4 verifies the signature of the print screen 123 and verifies signature of the transaction data 124. The server 4 reproduces the print screen of the transaction data 125. The print screen is reproduced on the basis of transaction data received from the apparatus 1. To verify signatures the server 4 uses the user's public ECC-P256 key 401. The last step of the method for securing data transmission in accordance with the invention is to update the unique sequential number 126 performed by the server 4, this number will be generated in the next transaction.

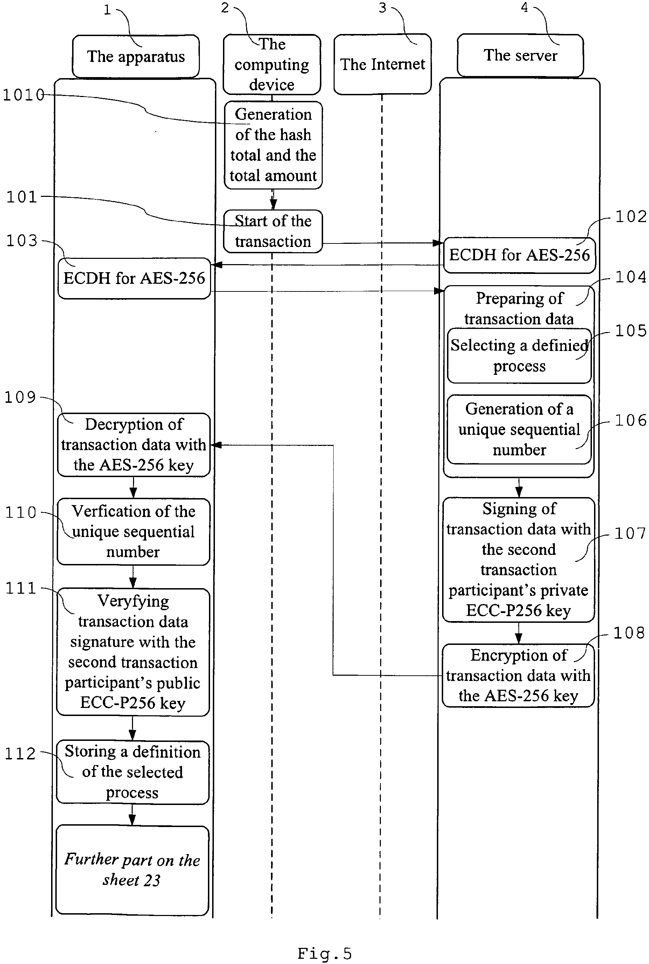

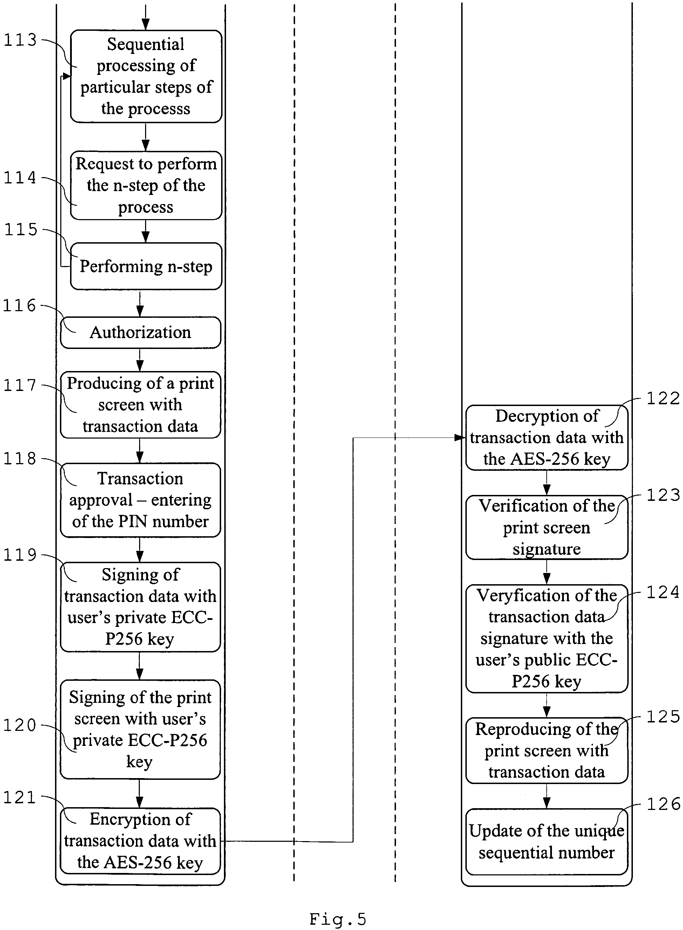

The embodiment of the invention described above relates to the method for securing data transmission in case where only one transaction is performed. However, after few little modifications this method can also be used when there are several transactions carried out during one session. The method for securing data transmission in case of multi-transaction compilation is presented in fig. 5. As to the merits, the method for securing data transmission for multi-transaction compilation contains the same elements as the method for securing data transmission for one transaction. The solution for multi-transaction compilation differs only by an additional element of generating the hash total and the total amount 1010. The hash total and the total amount are generated by the user's financial and accounting system.

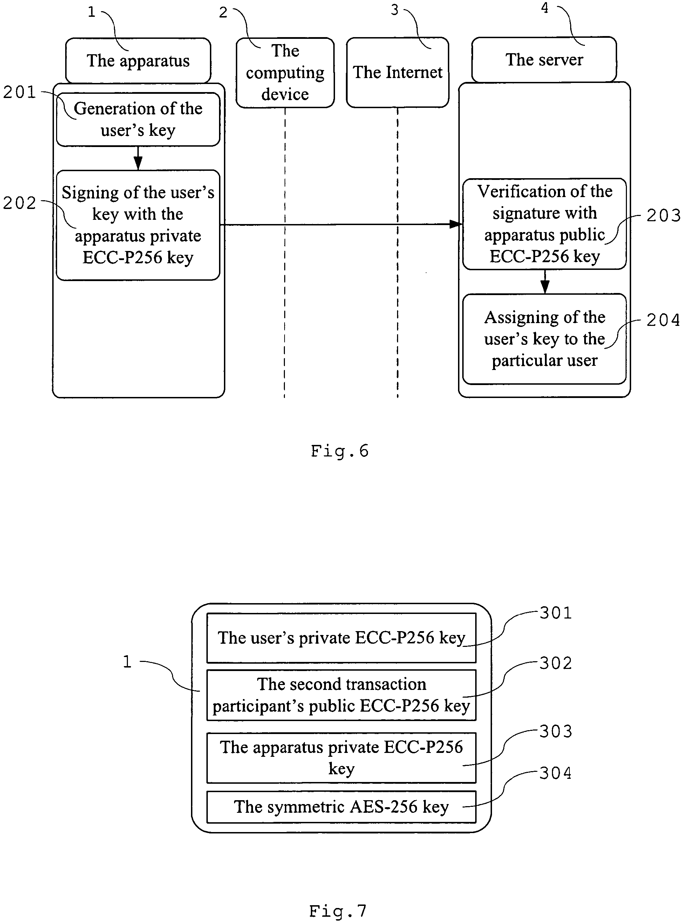

The method according to the invention has an additional feature - assigning user's key to the particular entity, in the current embodiment - the bank client which in consequence enhances the security of the data transmission. The flowchart of this key assignment presented in fig 6. Assigning the key to the user takes place during the first use of the apparatus 1. According to the invention the' apparatus 1 is connected to the computing device 2. When the user - the bank client establishes the first connection to the bank transaction service and to the server 4, the apparatus 1 generates the user's key 201. According to the invention this is ECC P256 key. Next, the apparatus 1 signs the user's key with the apparatus's private ECC-P256 key 202. The signed user's key is sent to the server 4. Next, the server 4 verifies the signature with the apparatus's public ECC-P256 key 203, then it assigns the user's key to the particular user 204. So, the assigned user's key is then used in all the transactions performed with the use of the apparatus 1.

Fig. 7 presents keys stored on the apparatus 1 used for encryption and signing. According to the invention the apparatus comprises of the following keys: the user's private ECC-P256 key 301 used for signing the transaction data and the print screen; the second transaction participant's public ECC-P256 key 302 used for verifying signature of the transaction data generated by this participant; the apparatus's private key ECC-P256 303 used for signing generated user's key and the symmetric AES-256 key 301 used for the communication encryption. These keys are stored on the cryptographic chip 12.

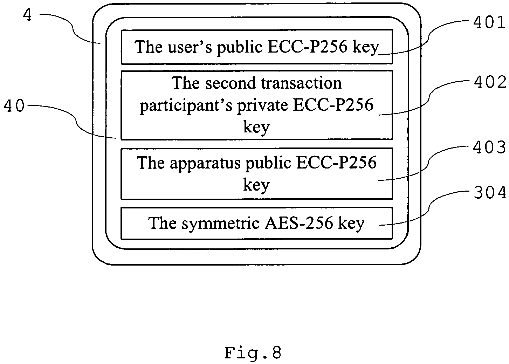

Fig. 8 presents keys used by the second transaction participant - bank, which are stored on the server 4. In the presented embodiment, the server 4 comprises of the dedicated device for storing the keys - hardware security module (HMS) 40. According to - the invention the server 4 stories following keys: the user's public ECC-P256 key 401 used for verification of the signature of the transaction data and the print screen; the second transaction participant's private ECC-P256 key 402 used for signing the signature of the transaction data generated by this participant; the apparatus's public ECC-P256 key 403 used for verification of the signature of the user's key and the symmetric AES-256 key 301 used for the communication encryption.

The solution according to the invention can be widely used to protect electronically transmitted data. The presented invention can be used in particular to secure banking transaction carried out electronically. Moreover the apparatus and the method can be used, for example, for establishing a secured communication channel to transmit confidential messages and attachments.

## Claims

1. The method for securing data transmission, especially transaction data, using the apparatus (1) containing an output interface and an input interface which are connected to a computing device (2) connected to a server (4) performing transaction, where a transaction participant with access to the server (4) prepares transaction data (104), the server (4) signs (107) and encrypts (108) these data and sends transaction data to the apparatus (1), afterwards the apparatus (1) decrypts transaction data (109) and verifies their signature (111), after the transaction approval (118) by the participant the apparatus (1) signs (119), encrypts (121) and sends transaction data to the server (4) which decrypts transaction data (122) and, verifies their signature (124), **characterized in that** keys based on the elliptic curve cryptography (ECC) are used to generate signatures, moreover the transaction participant with the access to the server (4) generates unique sequential number (106) for each subsequent transaction during the preparation of the transaction data (104), and the apparatus (1) produces a print screen with the transaction data (117) presented to the user.

2. The method according to claim 1, **characterized in that** the server (4) produces the print screen with transaction data (125) based on data received from the apparatus (1).

3. The method according to claim 1, **characterized in that** the apparatus (1) forces user to perform at least one defined process.

4. The method according to claim 3, **characterized in that** to perform a defined process, the server (4) selects a defined process (105), then the apparatus (1) stores the definition of the selected process (112) and subsequent step of the process (113) defined according to the definition, and sends a request to the user to perform a n-step of the process (114) ; after the n-step is performed by the user (115), the cycle is repeated until all defined steps of the process are performed.

5. The method according to claim 1, **characterized in that** the transaction approval (118) is carried out by entering PIN by the user, where PIN consists of letters and/or digits and/or special characters.

6. The method according to claim 1, **characterized in that** the keys used to sign transaction are the ECC-P256 keys.

7. The method according to claim 1, **characterized in that** the transaction data sent between the server (4) and apparatus (1) are encrypted with the use of the symmetric AES-256 key.

8. The method according to claim 7, **characterized in that** the symmetric AES-256 key is agreed upon with the use of the Diffie - Hellman (ECDH) protocol.

9. The method according to claim 1, **characterized in that** to secure multi-transaction compilation, user's financial and accounting system generates an hash total and a total amount before starting the transaction.

10. The method according to claim 1, **characterized in that** before executing the transaction the apparatus (1) performs authentication of the transaction participant who has the access to the server (4).

11. The method according to claim 1, **characterized in that** the apparatus (1), while connecting to the server (4) for the first time generates user's key (201), afterwards the apparatus (1) signs user's key with the apparatus' key (202) and sends this key to the server (4) which verifies the signature (203), then the transaction participant who has the access to the server (4) assigns user's key to the particular user (204).

12. The apparatus for securing data transmission, especially transaction data, has at least a communication module (13), a microcontroller (14), an output interface (10) and an input interface (11), **characterized in that** comprises a dedicated cryptographic chip (12) with cryptographic keys, and the communication module (13) is the USB module and/or the Bluetooth module and/or the GSM module.

13. The apparatus according to claim 12, **characterized in that** the output interface (10) and the input interface (11) are a touchscreen.

14. The apparatus according to claim 12, **characterized in that** the output interface (10) and the input interface (11) are a display and a keyboard.

15. Apparatus according to claim 12, **characterized in that** the input interface (11) is designed to enter digits and/or letters and/or special characters on it.
